# EUROPÄISCHE PATENTSCHRIFT

(11) **EP 2 016 323 B1**
(45) Veröffentlichungstag und Bekanntmachung des Hinweises auf die Patenterteilung: **26.10.2011**
(21) Anmeldenummer: 06724768.4
(22) Anmeldetag: 09.05.2006
(51) Int. Cl.: F16L 33/025

(54) **BANDKLEMME**
BAND CLAMP
PINCE D'ATTACHE

(43) Veröffentlichungstag der Anmeldung: 21.01.2009
(73) Patentinhaber: Hans Oetiker AG Maschinen- und Apparatefabrik, 8812 Horgen (CH)
(72) Erfinder: STREULI, Walter, Hausen am Albis (CH)
(74) Vertreter: Strehl Schübel-Hopf & Partner
(86) Internationale Anmeldenummer: PCT/EP2006/004344
(87) Internationale Veröffentlichungsnummer: WO 2007/128334

(56) Entgegenhaltungen:
- EP-A1- 0 601 307
- US-A- 4 430 775
- US-A- 5 138 747
- US-A- 5 305 499
- US-A- 5 740 589

## Beschreibung

### Stand der Technik

Aus US 5,305,499 ist eine aus einem Band geformte Klemme gemäß dem Oberbegriff des Anspruchs 1 bekannt. Die offene, im Lieferzustand kreisförmig vorgebogene Klemme wird um den zu klemmenden Gegenstand unter Überlappung der beiden Bandendbereiche herumgelegt. Zum Schließen der Klemme sind in dem überlappten inneren Bandendbereich Haken vorgesehen, die in im äußeren Bandendbereich vorhandene Öffnungen eingreifen. Anschließend wird die Klemme durch Verengen eines sogenannten "Oetiker-Ohrs" gespannt.

Bei der bekannten Klemme sind drei Haken vorhanden, von denen einer als Führungshaken in Form eines aus dem Bandmaterial herausgebogenen Lappens ausgebildet ist, der einen im äußeren Bandendbereich vorgesehenen, in Bandlängsrichtung verlaufenden Schlitz durchsetzt. Die beiden weiteren Haken sind aus dem inneren Bandendbereich durch Kaltverformung herausgeprägte Stützhaken, die an entsprechenden Kanten von fensterförmigen Öffnungen im äußeren Bandendbereich angreifen. Die vom inneren Bandende abgewandte Kante des Führungshakens verläuft schräg nach außen, so dass die einander überlappenden Bandendbereiche beim Spannen der Klemme aufeinander zu geführt und in enger Überlappung gehalten werden.

Die im gespannten Zustand der Klemme zwischen den beiden Bandendbereichen auftretenden Zugkräfte werden in erster Linie von den beiden am inneren Bandendbereich ausgebildeten Stützhaken auf die von der Spanneinrichtung abgewandten Kanten der im äußeren Bandendbereich ausgebildeten fensterförmigen Öffnungen übertragen. Es hat sich gezeigt, dass bei Erhöhung der zu übertragenden Zugkräfte ein Materialbruch an diesen Öffnungs- oder Fensterkanten stattfindet.

Aus US 5,138,747 ist eine Schlauchklemme mit einer Elatizitätsreserve in Form einer aufgesetzten Feder bekannt, die eine zusätzliche Einrichtung zur Begrenzung der an der Feder angreifenden Kraft aufweist. Auch diese Begrenzungseinrichtung arbeitet mit einem Haken, der bei der vorgesehenen Maximalkraft an der Kante einer Öffnung angreift.

### Abriss der Erfindung

Der Erfindung liegt die Aufgabe zugrunde, eine aus einem Band geformte, d.h. offene, Klemme anzugeben, die bei gleichem Material und gleicher Dimensionierung höhere Zugkräfte aushält als vergleichbare Klemmen nach dem Stand der Technik.

Die Lösung dieser Aufgabe gelingt mit der in Anspruch 1 gekennzeichneten Klemme.

Gemäß Anspruch 1 ist getrennt von der Schließeinrichtung und zusätzlich zu dieser eine Kraftübertragungseinrichtung vorgesehen, die zur formschlüssigen Übertragung der im gespannten Zustand der Klemme zwischen den einander überlappenden Bandendbereichen auftretenden Zugkraft dient. Dadurch wird die Schließeinrichtung, die mit einer Öffnung in einem der Bandendbereiche und einem in diese Öffnung eingreifenden Vorsprung am anderen Bandendbereich arbeitet, von den zu übertragenden Zugkräften frei. Anders als beim Stand der Technik wird somit die Teil der Schließeinrichtung bildende (mindestens eine) Öffnung, die notwendigerweise eine Schwächung des Bandmaterials darstellt, nicht gleichzeitig zur Kraftübertragung herangezogen. Versuche haben gezeigt, dass die erfindungsgemäße Klemme im Bereich der vollen Bandbreite, gegebenenfalls im Bereich der Spanneinrichtung, nicht aber an der Schließeinrichtung, bricht und daher höhere Kräfte auszuhalten vermag.

Die Gestaltung der Kraftübertragungseinrichtung als napfförmige Ausprägungen ist besonders vorteilhaft, weil diese die Festigkeit des Bandmaterials nicht verringern sondern eher erhöhen.

Bei der mindestens teilweise verrundeten Form der Ausprägungen nach Anspruch 2 werden Spannungspitzen im Kraftübertragungsbereich vermieden. Dabei ist die Gestaltung nach Anspruch 3 auch vom Standpunkt der Fertigung günstig.

In der Weiterbildung der Erfindung nach Anspruch 4 greifen die Ausprägungen mit Spiel ineinander, was das Schließen der Klemme erleichtert, ohne die Kraftübertragung zu beeinträchtigen.

Die Weiterbildung der Erfindung nach den Ansprüchen 6 und 7 ist insofern günstig, als die einander überlappenden Bandendbereiche im geschlossenen Zustand der Klemme dicht aufeinander gehalten werden. In Verbindung mit den Merkmalen der Ansprüche 8 und 9 wird erreicht, dass sich die beiden ineinandergreifenden Ausprägungen auch bei hohen Zugkräften nicht voneinander lösen können.

Typische Maßangaben sind in Anspruch 10 angegeben.

Besonders geeignet ist die Erfindung in Zusammenhang mit der in Anspruch 11 dargelegten Gestaltung der Spanneinrichtung.

### Kurzbeschreibung der Zeichnung

Ausführungsbeispiele der Erfindung werden nachstehend anhand der Zeichnung näher erläutert. Darin zeigt
- Fig. 1: eine Seitenansicht einer Schlauchklemme im geschlossenen, nicht gespannten Zustand;
- Fig. 2: eine Seitenansicht des Schlauchklemmen-Bandes im noch gestreckten, aber sonst fertig verformten Zustand der Klemme;
- Fig. 3: eine Draufsicht auf das Klemmband nach Fig. 2;
- Fig. 4: einen Querschnitt an der Stelle A - A der Fig. 1 und
- Fig. 5 und 6: vergrößerte Längsschnitte durch die in dem Klemmband vorgesehenen Ausprägungen an den in Fig. 2 mit Y und Z bezeichneten Stellen.

### Detailbeschreibung von Auführungsbeispielen

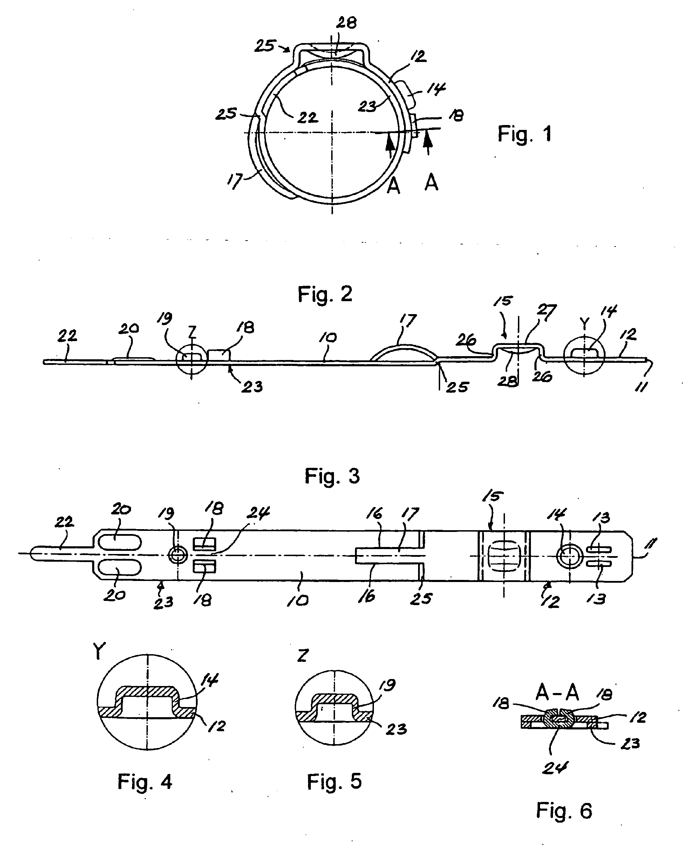

Die in der Zeichnung dargestellte Schlauchklemme ist aus einem Stahlband **10** einer Breite von 8 bis 15 mm, typisch **10** mm, mit einer Banddicke von 0,6 bis 1,0 mm, typisch 0,8 mm, hergestellt. Ausgehend vom freien Ende **11** des Bandendbereichs **12,** der in dem in Fig. 1 dargestellten geschlossenen Zustand der Klemme den äußeren Bandbereich bildet, sind in dem Band **10** folgende Formationen ausgebildet:
zwei in Bandlängsrichtung verlaufende parallele Schlitze **13,**
eine napfförmige Ausprägung **14,**
eine ohrförmige Spanneinrichtung **15**,
ein durch zwei Längsschnitte **16** seitlich freigeschnittener und aus dem Band **10** herausgedrückter mittlerer Bandteil **17,**
zwei aus dem Band **10** dreiseitig freigeschnittene und herausgeklappte, parallel zur Bandlängsrichtung verlaufende Lappen **18,**
eine weitere napfförmige Ausprägung **19,**
zwei parallel zur Bandlängsrichtung verlaufende, aus dem Band **10** herausgewölbte Führungsbereiche **20** und
eine am entgegengesetzten Ende **21** des Bandes **10** ansetzende Zunge **22.**

Die Schlitze **13** und die erste napfförmige Ausprägung **14** sind in dem geschlossenen Zustand der Klemme gemäß Fig. 1 äußeren Bandendbereich **12,** die Lappen **18** und die zweite napfförmige Ausprägung **19** in dem inneren Bandendbereich **23** ausgebildet.

Die beiden durch Tiefziehen aus dem Material des Bandes **10** gebildeten napfförmigen Ausprägungen **14** und **19** sind im Bandlängsschnitt im wesentlichen umgekehrt-U-förmig und in der Draufsicht kreisförmig. Der innere Durchmesser der im äußeren Bandendbereich **12** vorgesehenen Ausprägung **14** beträgt 3,5 bis 4,0 mm, typisch 3,8 mm, und ist um 0,2 bis 0,4 mm, typisch 0,3 mm, größer als der äußere Durchmesser der im inneren Bandendbereich **23** ausgebildeten Ausprägung **19.** Die beiden Ausprägungen **14** und **19** greifen also mit Spiel ineinander und lassen sich daher beim Schließen der Klemme leicht in Eingriff bringen.

Im geschlossenen Zustand der Klemme durchsetzen die Lappen **18** die Schlitze **13** und sind, wie in Fig. 6 gezeigt, auf der Außenseite des äußeren Bandendbereichs **12** aufeinander zu umgeklappt, so dass sie den zwischen den Lappen **18** verbleibenden Steg **24** des Bandes **10** im wesentlichen vollständig umschließen. Da die Schlitze **13** nahe dem freien Ende **11** des äußeren Bandendbereichs **12** ausgebildet sind, wird dieser dicht auf dem inneren Bandendbereich **23** gehalten, der seinerseits den (nicht gezeigten) zu klemmenden Gegenstand umgibt. Dies bewirkt, dass die beiden napfförmigen Ausprägungen **14** und **19** in sicherem Eingriff miteinander gehalten werden.

In dem in Fig. 1 gezeigten geschlossenen Zustand der Klemme erstreckt sich die Zunge **22** mit ihrem freien Ende in den Bereich einer in dem Band **10** ausgebildeten Stufe **25,** an der der unter dem herausgeprägten mittleren Bandteil **17** vorhandene, durch die beiden Schnitte **16** gebildete Schlitz beginnt.

Das die Spanneinrichtung bildende Ohr **15** weist zwei im ungespannten Zustand der Klemme senkrecht zum Band **10** verlaufende Schenkelteile **26** und einen deren äußere Enden verbindenden Brückenteil **27** auf, der durch eine eingeprägte, zwischen den Führungsbereichen **20** geführte Sicke **28** versteift ist.

Zum Spannen der Klemme wird das Ohr **15** durch ein an den Fußenden der Schenkelteile **26** angreifendes zangenartiges Werkzeug verengt und dadurch die Umfangslänge der Klemme verkürzt, wobei sich die Zunge **22** weiter unter den herausgedrückten mittleren Bandteil **17** verschiebt. Die dabei zwischen dem äußeren Bandendbereich **12** und dem inneren Bandendbereich **23** auftretenden Zugkräfte werden von dem ineinandergreifenden napfförmigen Ausprägungen **14** und **19** aufgenommen, die einander in dem von dem Ohr **15** abgewandten Bereich der äußeren Ausprägung **14** berühren. Die geschlossene runde Form der Ausprägungen **14** und **19** gestattet die Übertragung sehr hoher Kräfte. Demgegenüber bleiben die Schlitze **13,** durch die die Lappen **18** der Schließeinrichtung geführt sind, frei von Zugkräften.

Um die Ausprägungen **14** und **19** in sicherem Eingriff zu halten, ist es zweckmäßig, sie möglichst nahe an der von den Schlitzen **13** und den Lappen **18** gebildeten Schließeinrichtung anzuordnen. Durch diese Maßnahme wird gleichzeitig unnötige Bandlänge vermieden.

Da die Schlitze **13** keine Zugkräfte aufzunehmen haben, können sie nahe am freien Ende **11** des äußeren Bandendbereichs **12** enden. Auch insofern lässt sich Bandlänge einsparen.

Die Ausprägungen **14** und **19** brauchen nicht die in dem oben beschriebenen Ausführungsbeispiel dargestellte Kreisform zu haben. Zur Vermeidung von Spannungsspitzen ist es zweckmäßig, wenn sie wenigstens in dem Bereich verrundet sind, der bei der äußeren Ausprägung **14** von dem Ohr **15** abgewandt ist, d.h. wenn die Ausprägungen **14** und **19** in ihren gemäß Fig. 4 und 5 rechten Bereichen einander berühren.

Die oben angegebenen Materialien und Dimensionen dienen nur der Erläuterung eines typischen Ausführungsbeispiels. Die Erfindung ist generell bei Bandklemmen auch aus anderen Werkstoffen und mit anderen Abmessungen anwendbar.

## Patentansprüche

1. Aus einem Band **(10)** geformte Klemme mit im geschlossenen Zustand einander überlappenden Bandendbereichen **(12, 23),** mit
einer Schließeinrichtung **(13, 18),** die eine Öffnung **(13)** in einem der Bandendbereiche **(12)** und einen im geschlossenen Zustand der Klemme in die Öffnung **(13)** eingreifenden Vorsprung am anderen Bandendbereiche **(23)** aufweist und die einander überlappenden Bandendbereiche **(12, 23)** aufeinander hält,
einer **Spanneinrichtung (15)** zum Spannen der Klemme durch Verringern ihrer Umfangslänge zwischen dem geschlossenen und einem gespannten Zustand, und
einer von der Schließeinrichtung **(13, 18)** getrennten Kraftübertragungseinrichtung **(14, 19)** zur formschlüssigen Übertragung der im gespannten Zustand der Klemme zwischen den einander überlappenden Bandendbereichen **(12, 23)** auftretenden Zugkraft,
**dadurch gekennzeichnet, dass** die Kraftübertragungseinrichtung **(14, 19)** eine in einem Bandendbereiche **(12)** ausgebildete erste napfförmige Ausprägung **(14)** und eine in dem anderen Bandendbereiche **(23)** ausgebildete, im geschlossenen Zustand der Klemme in die erste napfförmige Ausprägung **(14)** eingreifende zweite napfförmige Ausprägung **(19)** umfasst.

2. Klemme nach Anspruch 1, wobei die beiden napfförmigen Ausprägungen **(14, 19)** mindestens in dem Bereich verrundet sind, der bei der eingreifenden Ausprägung **(19)** der Spanneinrichtung **(15)** zugewandt und bei der umgreifenden Ausprägung **(14)** von der Spanneinrichtung **(15)** abgewandt ist.

3. Klemme nach Anspruch 1 oder 2, wobei die beiden Ausprägungen **(14, 19)** in einem zur Bandoberfläche parallelen Schnitt kreisrund sind.

4. Klemme nach einem der vorhergehenden Ansprüche, wobei die innere Abmessung einer Ausprägung **(14)** größer ist als die äußere Abmessung der anderen Ausprägung **(19).**

5. Klemme nach einem der vorhergehenden Ansprüche, wobei die beiden Ausprägungen **(14, 19)** aus dem Band **(10)** der Klemme tiefgezogen sind.

6. Klemme nach einem der vorhergehenden Ansprüche, wobei die Schließenrichtung **(13, 18)** einen in einem Bandendbereiche **(23)** ausgebildeten, in Bandlängsrichtung verlaufenden Schlitz **(13)** und einen aus dem anderen Bandendbereiche **(12)** herausgebogenen und durch den Schlitz **(13)** hindurchführbaren Lappen **(18)** aufweist.

7. Klemme nach Anspruch 6, wobei die Schließeinrichtung **(13, 18)** in dem im geschlossenen Zustand der Klemme inneren Bandendbereich **(23)** zwei parallele Lappen **(18)** aufweist, die durch entsprechende parallele Schlitze **(13)** im äußeren Bandendbereich **(12)** hindurchführbar und aufeinanderzu umklappbar sind.

8. Klemme nach einem der vorhergehenden Ansprüche, wobei die Kraftübertragungseinrichtung **(14, 19)** in unmittelbarer Nähe der Schließeinrichtung **(13, 18)** angeordnet ist.

9. Klemme nach einem der vorhergehenden Ansprüche, wobei die Kraftüberträgungseinrichtung **(14, 19)** auf der Seite der Schließeinrichtung **(13, 18)** angeordnet ist, die bei dem im geschlossenen Zustand der Klemme äußeren Bandendbereich **(12)** von dessen freiem Ende **(11)** abgewandt ist.

10. Klemme nach einem der vorhergehenden Ansprüche, wobei bei einer Breite des Bandes **(10)** von 8 bis 15 mm und einer Banddicke von 0,6 bis 1,0 mm der innere Durchmesser einer napfförmigen Ausprägung **(14)** 3,5 bis 4,0 mm beträgt und um 0,2 bis 0,4 mm größer ist als der äußere Durchmesser der anderen napfförmigen Ausprägung **(19).**

11. Klemme nach einem der vorhergehenden Ansprüche, wobei die Spanneinrichtung **(15)** ein aus dem Band **(10)** geformtes Ohr umfasst, das zwei im ungespannten Zustand der Klemme senkrecht zum Band **(10)** verlaufende Schenkelteile **(26)** und einen deren äußere Enden verbindenden Brückenteil **(27)** aufweist.

## Claims

1. A clamp formed of a band **(10)** and having band end portions **(12, 23)** which overlap in the closed condition, comprising
closing means **(13, 18)** including an aperture **(13)** in one of the band end portions **(12)** and a projection on the other band end portion **(23)** to engage the aperture **(13)** in the closed condition of the clamp and hold the mutually overlapping band end portions **(12, 23)** upon one another;
tightening means **(15)** for tightening the clamp by reducing the circumferential length thereof between the closed condition and a tightened condition; and
transmitting means **(14, 19)** separate from the closing means **(13, 18)** for positively transmitting the tensile force which acts between the mutually overlapping band end portions **(12, 23)** in the tightened condition of the clamp,
**characterised in that** the force transmitting means **(14, 19)** includes a first cup-shaped embossment **(14)** formed in one band end portion **(12)** and a second cup-shaped embossment **(19)** formed in the other band end portion **(23)** to engage the first cup-shaped embossment **(14)** in the closed condition of the clamp.

2. The clamp of claim 1, wherein the two cup-shaped embossments **(14, 19)** are rounded at least in that area which is adjacent the tightening means **(15)** in the inner embossment **(19)** and is remote from the tightening means **(15)** in the outer embossment **(14).**

3. The clamp of claim 1 or 2, wherein the two embossments **(14, 19)** are circular in a cross-section taken parallel to the band surface.

4. The clamp of any preceding claim, wherein the inner dimension of one embossment **(14)** is larger than the outer dimension of the other embossment **(19).**

5. The clamp of any preceding claim, wherein the two embossments **(14, 19)** are deep-drawn from the band **(10)** of the clamp.

6. The clamp of any preceding claim, wherein the closing means **(13, 18)** includes a slot **(19)** formed in one band end portion **(23)** and extending in the longitudinal direction of the band, and a tab **(18)** bent out of the other band end portion **(12)** to extend through the slot **(13).**

7. The clamp of claim 6, wherein the closing means **(13, 18)** includes two parallel tabs **(18)** in that band end portion **(23)** which is the inner one in the closed condition of the clamp, the tabs being adapted to extend through corresponding parallel slots **(13)** in the outer band end portion **(12)** and to be folded upon one another.

8. The clamp of any preceding claim, wherein the force transmitting means **(14, 19)** is disposed in close proximity to the closing means **(13, 18).**

9. The clamp of any preceding claim, wherein the force transmitting means **(14, 19)** is disposed on the side of the closing means **(13, 18)** remote from the free end **(11)** of that band end portion **(12)** which is the outer one in the closed condition of the clamp.

10. The clamp of any preceding claim, wherein the inner diameter of one cup-shaped embossment **(14)** is 3.5 to 4.0 mm and greater by 0.2 to 0.4 mm than the outer diameter of the other cup-shaped embossment **(19),** for a width of the band **(10)** from 8 to 15 mm and a band thickness from 0.6 to 1.0 mm.

11. The clamp of any preceding claim, wherein the tightening means **(15)** includes an ear formed of the band **(10)** and having two leg portions **(26)** extending perpendicular to the band **(10)** in the non-tightened condition of the clamp, and a bridge portion **(27)** interconnecting the outer ends of the leg portions.

## Revendications

1. Collier de serrage formé à partir d'une bande (10) comportant des zones d'extrémité de bande (12, 23) qui se chevauchent mutuellement à l'état fermé, comportant :
des moyens de fermeture (13, 18) comportant une ouverture (13) dans l'une des zones d'extrémité de bande (12) et une saillie sur l'autre zone d'extrémité de bande (23) en prise dans l'ouverture (13) lorsque le collier de serrage est à l'état fermé, lesquels moyens de fermeture maintiennent les zones d'extrémité de bande en chevauchement mutuel (12, 13) l'une sur l'autre,
des moyens de serrage (15) pour serrer le collier de serrage en réduisant sa longueur circonférentielle entre l'état fermé et un état serré, et
des moyens de transmission de force (14, 19) séparés des moyens de fermeture (13, 18) pour transmettre mécaniquement la force de traction créée entre les zones d'extrémité de bande en chevauchement mutuel (12, 23) lorsque le collier de serrage est à l'état serré,
**caractérisé en ce que** les moyens de transmission de force (14, 19) incluent un premier bossage en forme de cuvette (14) formé dans une zone d'extrémité de bande (12), et un second bossage en forme de cuvette (19) formé dans l'autre zone d'extrémité de bande (23), en prise dans le premier bossage en forme de cuvette (14) lorsque le collier de serrage est à l'état fermé.

2. Collier de serrage selon la revendication 1, dans lequel les deux bossages en forme de cuvette (14, 19) sont arrondis au moins dans la zone qui est dirigée vers les moyens de serrage (15) lorsque le bossage (19) est en prise et opposée aux moyens de serrage (15) lorsque le bossage (14) est en prise enveloppante.

3. Collier de serrage selon la revendication 1 ou 2, dans lequel les deux bossages (14, 19) sont circulaires dans une section parallèle à la surface de bande.

4. Collier de serrage selon l'une quelconque des revendications précédentes, dans lequel la dimension intérieure d'un bossage (14) est plus grande que la dimension extérieure de l'autre bossage (19).

5. Collier de serrage selon l'une quelconque des revendications précédentes, dans lequel les deux bossages (14, 19) sont obtenus par emboutissage profond de la bande (10) du collier de serrage.

6. Collier de serrage selon l'une quelconque des revendications précédentes, dans lequel les moyens de fermeture (13, 18) comportent une fente (13) formée dans une zone d'extrémité de bande (23) et s'étendant dans la direction longitudinale de la bande, et une languette (18) pliée vers l'extérieur à partir de l'autre zone d'extrémité de bande (12) et pouvant passer à travers la fente (13).

7. Collier de serrage selon la revendication 6, dans lequel les moyens de fermeture (13, 18) comportent deux languettes parallèles (18) dans la zone d'extrémité de bande intérieure (23) lorsque le collier de serrage est à l'état fermé, lesquelles languettes peuvent passer à travers des fentes parallèles correspondantes (13) dans la zone d'extrémité de bande extérieure (12) et être rabattues l'une sur l'autre.

8. Collier de serrage selon l'une quelconque des revendications précédentes, dans lequel les moyens de transmission de force (14, 19) sont agencés à proximité directe des moyens de fermeture (13, 18).

9. Collier de serrage selon l'une quelconque des revendications précédentes, dans lequel les moyens de transmission de force (14, 19) sont agencés sur le côté des moyens de fermeture (13, 18) qui est opposé à l'extrémité libre (11) de la zone d'extrémité de bande extérieure (12) lorsque le collier de serrage est à l'état fermé.

10. Collier de serrage selon l'une quelconque des revendications précédentes, dans lequel, pour une largeur de la bande (10) de 8 à 15 mm et une épaisseur de bande de 0,6 à 1,0 mm, le diamètre intérieur d'un bossage en forme de cuvette (14) est de 3,5 à 4,0 mm et est plus grand de 0,2 à 0,4 mm que le diamètre extérieur de l'autre bossage en forme de cuvette (19).

11. Collier de serrage selon l'une quelconque des revendications précédentes, dans lequel les moyens de serrage (15) comportent une oreille formée à partir de la bande (10), laquelle oreille comporte deux parties de patte (26) s'étendant perpendiculairement à la bande (10) lorsque le collier de serrage est à l'état non serré, et une partie en pont (27) reliant l'une de leurs extrémités extérieures.
